# EUROPEAN PATENT APPLICATION

(11) **EP 1 279 600 A1**
(43) Date of publication of application: **29.01.2003**
(21) Application number: 01117842.3
(22) Date of filing: 23.07.2001
(51) Int. Cl.: B65B 31/04, B65B 25/16, A21D 15/00

(54) **Method for packaging partially baked bread in a long shelf-life package**

(71) Applicant: Cryovac, Inc., Duncan, S.C. 29334 (US)
(72) Inventor: Deighton, Jeff, Chinnor Oxfordshire OX9 4PL (GB); Skelton, Dave, Hoddlesden Darwen Lancashire BB3 3RA (GB); Guidotti, Paolo, 28040 Oleggio Castello (Novara) (IT)
(74) Representative: De Carli, Elda

(57) **Abstract**

A method for packaging a partially baked bread product into a gas-barrier package under a preservative gas or gas mixture to get a long shelf-life product characterized in that the partially baked bread product coming from the baking oven is packaged in-line while it has not yet cooled down to a temperature of 80 °C or less.

## Description

The present invention relates to a method for packaging a partially baked bread product to get a long shelf life package.

More particularly the present invention relates to a method for packaging a partially baked bread product into a gas-barrier thermoplastic packaging material under modified atmosphere and getting a long shelf-life package without the need to freeze or sterilize the package.

Bread is made by baking a dough that consists largely of wheat flour, water, yeast, and salt. Other ingredients which may be added, mainly for making the so-called "special breads", include flours of other cereals, fat, malt flour, soya flour, emulsifiers, milk and milk products, etc..

There are five stages in the manufacture of bread : mixing, bulk fermentation time (BFT), dividing, moulding, proving and baking.

Baking can be done in one single step or in two separate steps. In the first step of the two-step baking process, a traditional leavened dough is submitted to a baking process that is stopped however after the bread product has essentially reached its final structure and the action of the leavening is completed but before coloration and formation of the crusty surface. The partially baked bread thus obtained is then submitted in the second step to a complementary baking. While completely baked bread is known to get stale rapidly and is best to be consumed daily, part-baked bread lasts for some time, typically up to seven days, depending on temperature and humidity, and the complementary baking gives a product that has the appearance, consistency and flavour of a fresh, just baked, bread. This two steps baking process is therefore widely used mainly in the supermarkets or retail stores, where partially baked bread products are acquired from an outside plant bakery, and subjected to the final baking phase when needed. This same method finds extensive use also in hospitals, nursing homes, prisons, schools, in the armed services, employee's cafeterias and in many commercial or institutional kitchens.

To further increase the period of storage of the partially baked bread, once the partial baking step is over and the product is cooled down, the product is packaged in a thermoplastic material under ambient atmosphere and it is frozen; alternatively it is packaged in a gas-barrier thermoplastic material under the modified atmosphere of a preservative gas, and, either before or after the packaging step, submitted to a sterilization step.

The disadvantages of the freezing technique are evident as handling frozen products requires specially refrigerated rooms for storage and specially refrigerated wagons for transport and delivery thus increasing costs; the disadvantages of a separate sterilization step, either before or after packaging of the partially baked products, also are evident as the addition of a further step will anyway increase the cost of the overall process particularly when a high temperature treatment, as in case of sterilization, is required.

In particular GB-A-2,005,980 describes a process where the packages containing the partially baked products are at least partially vacuumized, a preservative gas (CO₂ and/or N₂) is added thereto, the package is sealed and finally it is conveyed to a tunnel oven to ensure the final heat-treatment for sterilization purposes.

EP-A-193,223 describes a process where the partially baked product and the packaging material are separately sterilized before packaging under aseptic conditions.

According to EP-A-666,028 the sterilization step can be avoided by injecting inside the mass of the partially baked product a preserving gas or gas mixture to replace completely the air inside it. Still according to EP-A-666,028, packaging the treated product with an airtight wrapping within about 2 minutes from the injection, remarkably increases the preservability of the partially baked bread. It is in fact the impossibility to control the residual oxygen contained in the internal alveoli of the partially baked bread, in spite of the care taken in the vacuumization step, that renders the sterilization step necessary in the prior art processes. The presence of residual oxygen does not allow to effectively stop the development of moulds and bacteria that would unavoidably contaminate the product during the cooling pause before packaging. EP-A-666,028 also describes the overall packaging process involving the injection step and an apparatus for carrying out said process including a movable plate, equipped with a series of needles connected with a gas-dispensing device.

It has now been found and it is the object of the present invention that it is possible to package partially baked bread in a gas-barrier thermoplastic film under a modified atmosphere and get a long shelf life for the packaged product without any need to freeze the product, sterilize it, or injecting anything within the bread mass, by merely packaging the partially baked product coming out of the baking oven while it is still hot.

More particularly it has been found that if the packaging of the partially baked product in a thermoplastic gas-barrier packaging material, under a modified atmosphere introduced while and after the package has been vacuumized, is carried out when the product coming out from the oven is still at a temperature of at least 80 °C, then there is no need to sterilize the package or to freeze the product or to inject a preserving gas into the bread mass, to get the desired shelf-life. As a matter of fact the product coming out of the baking oven can be considered to be sterile and only a negligible contamination may occur if the product is packaged before its temperature cools down to less than 80 °C; furthermore by packaging the product while still hot, the amount of air in the alveoli of the bread mass is highly reduced and as a consequence thereof also the residual oxygen in the final package is kept well below the 1-2 % limit. The combination of these effects does increase the shelf life of the partially baked product to more than one month without resorting to any particular treatment or specially designed apparatus.

Furthermore packaging the partially baked product while still hot does speed up the overall process increasing the production rate and reducing the cost thereof.

The oven for the first baking step can be electric, oil fired or gas fired hot air baking oven. This first step of partial baking generally requires at least 10 minutes, typically from 12 to 45 minutes, depending on the type of bread (e.g. the type of flour and the amount of water), the weight and volume of the single dough pieces, the baking method (wherein tinned products require a longer time and oven bottom products a shorter one) and the temperature of the oven.

Generally the temperature required for this first partial baking step is comprised between about 90 °C and about 240 °C, and preferably between about 100 °C and about 230 °C. Typically, in the plant bakeries, the temperature is optimum at the beginning of the baking process and steam is injected into the oven chamber to enhance crust and the temperature is then reduced for the final 20% of bake.

In this first baking step, the interior of the bread is completely structured, and the starch gelatinized to a large extent but the caramelized crust should not yet be completely formed. This will be achieved typically when the temperature at the core of the bread product is of at least 70 °C.

The products coming out of the oven are then packaged in line while the temperature of the crust has not yet lowered to 80 °C or less.

Single packs or multi-packs can be made, depending on the customers' needs.

Substantially any gas-barrier thermoplastic material can be employed for said packaging provided said material could be employed for food contact applications and can withstand the temperature of the bread product without deteriorating.

Bags or pouches of flexible thermoplastic materials, typically up to 100 µm, preferably up to 60 µm, and more preferably up to 40 µm, can suitably be employed as well as films of the above thickness for wrapping up the products with a FFS machine. Alternatively thermoformable laminates, typically up to 250 µm, preferably up to 150 µm and more preferably up to 100 µm can be employed.

Actually the gas-barrier thermoplastic material may be a monolayer structure of a gas-barrier resin but preferably it is a multi-layer sheet wherein at least one layer has gas-barrier properties.

Non-limitative examples of gas-barrier polymers that can suitably be employed for the gas-barrier layer are EVOH, PVDC, and polyamides.

As used herein, the term EVOH includes saponified or hydrolyzed ethylene-vinyl acetate copolymers, and refers to vinyl alcohol copolymers having an ethylene comonomer content preferably comprised from about 28 to about 48 mole %, more preferably, from about 32 to about 44 mole % ethylene, and even more preferably, from about 36 to about 42 mole % ethylene, and a saponification degree of at least 85 %, preferably at least 90 %.

The term PVDC refers to a vinylidene chloride copolymer wherein a major amount of the copolymer comprises vinylidene chloride and a minor amount of the copolymer comprises one or more unsaturated monomers copolymerisable therewith, typically vinyl chloride, and alkyl acrylates or methacrylates (e.g. methyl acrylate or methacrylate) or to a blend thereof in different proportions. Generally said PVDC contains plasticisers and/or stabilizers as known in the art.

The term polyamide is intended to refer to both polyamides and co-or ter-polyamides. This term specifically includes aliphatic polyamides or co-polyamides, aromatic polyamides or co-polyamides, and partially aromatic polyamides or co-polyamides, modifications thereof and blends thereof.

As gas-barrier material also blends of EVOH with polyamides can suitably be employed.

The gas-barrier material may also consist of a silica-coated film or anyway of a film of thermoplastic material with deposited a thin layer of inorganic metal oxides (typically silica or alumina) known to provide barrier properties in critical packaging applications.

Preferably however the barrier layer will comprise a thermoplastic polymer selected from the group consisting of PVDC, EVOH, and polyamides. Even more preferably the barrier layer will comprise PVDC or EVOH.

The thickness of the gas-barrier layer will be set in order to provide the overall multi-layer sheet with an Oxygen Transmission Rate (OTR) (evaluated by following the method described in ASTM D-3985 and using an OX-TRAN instrument by Mocon) lower than 10, preferably lower than 5 cm³/m².d.atm, when measured at 23°C and 0 % of relative humidity.

Typically when PVDC or EVOH are employed as the gas-barrier materials, this is achieved with barrier layers 3-6 µm thick. Thicker layers can be used if desired or if a lower OTR is needed, while thinner layers can be used e.g. if a polymer with higher barrier properties is employed.

Preferably the gas-barrier film will also comprise at least an inner heat-sealable layer.

Said layer can comprise one or more polyolefin typically selected from the group consisting of ethylene homopolymers, ethylene copolymers, propylene homopolymers and propylene copolymers. These resins in fact are heat-sealable, generally withstand the temperature of the hot partially baked product and are among the least expensive resins. Any other resin however can be employed provided it is heat-sealable and withstands the temperature of the hot bread. If necessary or desirable the structure may also contain an outermost, abuse-resistant layer that may be equal or different from the heat-sealable layer, tie layers to increase the bond between any two adjacent layers, and bulk layers to increase the mechanical properties of the structure and its thermoformability in case a thermoformable laminate is employed.

The multi-layer thermoplastic film of sheet used in the process of the present invention may also contain oxygen scavengers in the heat-sealable inner layer or in any layer of the multi-layer structure positioned between the heat-sealable layer and the gas-barrier layer. It would thus be possible to reduce the amount of residual oxygen within the package to almost zero.

The thermoplastic sheet used for packaging in the method according to the present invention can be manufactured by any method. It can be a cast film or sheet, a blown film, an oriented and optionally heat-set film. It can be co-extruded or laminated, either glue-laminated, heat-laminated or extrusion-laminated.

However it is generally preferred not to use heat-shrinkable films, particularly in the manufacture of multi-packs, as the shrink that would occur on packaging may bring the bread products close together so that the preserving gas or gas mixture cannot freely circulate around the products. The packaging process involves the following steps :
- loading the partially baked product coming from the oven, while still at a temperature of at least 80 °C, preferably at least 83 °C, more preferably at least 85 °C, into the gas-barrier bag, or into the thermoformed gas-barrier container, or wrapped up in a pouch or tubing created around the product with a flexible gas-barrier film,
- at least partially vacuumizing the package,
- introducing a modified atmosphere therein, typically comprising carbon dioxide optionally admixed with inert gases, and
- closing the package with a hermetic seal.

Care should be taken during the vacuumization step not to create a too tight vacuum to avoid collapse and closure of the alveoli in the partially baked bread mass that would irreversibly deform the bread itself. It is also possible to carry out the two steps (vacuumization and introduction of a modified atmosphere) not sequentially but almost simultaneously, beginning however with the vacuumization step.

The modified atmosphere is preferably 100 % carbon dioxide, however mixtures of carbon dioxide with typically up to 30 or 40 % of nitrogen or any other inert gas, can be employed. The modified atmosphere that will be introduced will typically be free from oxygen (i.e. oxygen content < 0.1 %) so that upon re-equilibration with the residual air contained in the product to be packaged after the vacuumization step, the amount of residual oxygen in the final package will be < 1 %.

The ratio product/gas volume is generally of at least 0.2, preferably at least 0.3, more preferably at least 0.4. These ratios also should be controlled to achieve the desired low % value of residual oxygen.

Closing of the package to produce a hermetic seal is typically obtained by heat-sealing the thermoplastic packaging material. This can be obtained by any known sealing means e.g. by hot sealing bars, impulse sealing, ultra-sonic sealing, etc.

The packages thus obtained, without being submitted to any additional step, can be kept at room temperature for at least one month without development of moulds or bacteria.

The packaging material used in the process of the present invention can bear, printed, labeled or coded thereon, all the necessary or desired information, such as type of product, ingredients, weight, date of production, directions for the preservation and the baking off step, etc.

Most types of bread can be packaged by the above method and maintain the desired shelf life when partially baked. Examples are rolls, French baguettes, "ciabatta" (or flat baguettes), and the like.

The partially baked bread products thus packaged are then sent to retail bake-off units or institutions and either subjected to the final baking phase and sold or sold directly in the package for home consumption. Said packages can be kept ambient temperature for at least one month from packed date and are opened up only when the partially baked bread products need to be baked off.

For conventional types of bread temperatures over 200 °C are generally required. Bake-off typically takes 5-15 minutes.

The conditions for this second baking step, as indicated above, may vary depending on the type of bread, the weight thereof, the amount of moisture still contained therein, the level of partial baking, and the type of oven. Typically however the temperature reached in this second baking step is over 160 °C and generally over 200 °C.

## Claims

1. A method of packaging a partially baked bread product to get a package with a long shelf-life, which method comprises packaging a partially baked bread product in a gas-barrier thermoplastic film or sheet under a modified atmosphere, **characterised in that** the partially baked bread product coming out from the baking oven is packaged in-line while it has not yet cooled down below a minimum temperature of 80 °C, preferably while it has not yet cooled down below a minimum temperature of 83 °C, and more preferably while it has not yet cooled down below a minimum temperature of 85 °C.

2. The method of claim 1 wherein the modified atmosphere comprises at least 50 % of CO₂.

3. The method of claim 1 wherein the modified atmosphere comprises CO₂, and up to 30 % of one or more inert gases.

4. The method of claim 1 wherein the package is vacuumized to remove the ambient atmosphere before reinserting the modified one.

5. The method of claim 5 wherein the vacuumization step is suitably controlled to avoid collapse of the alveoli in the bread mass.

6. The method of claim 1 wherein the packaging material has an Oxygen Transmission Rate (OTR) (evaluated by following the method described in ASTM D-3985 and using an OX-TRAN instrument by Mocon) lower than 10, preferably lower than 5 cm³/m².d.atm, when measured at 23 °C and 0 % of relative humidity.

7. The method of claim 1 wherein the partially baked bread is loaded into a gas-barrier thermoformed sheet, closed by a gas-barrier lidding film.

8. The method of claim 1 consisting of the following steps :
• loading the partially baked product coming from the oven, while still at a temperature of at least about 80 °C, preferably at least of about 83 °C and even more preferably at least about 85 °C, into a gas-barrier bag, or into a thermoformed gas-barrier container, or wrapped up in a pouch or tubing created around the product with a flexible gas-barrier film,
• at least partially vacuumizing the package,
• introducing a modified atmosphere therein, comprising carbon dioxide optionally admixed with inert gases, and
• closing the package with a hermetic seal.

9. The method of any of the preceding claims wherein the amount of residual oxygen in the final package is < 1 %.

10. The method of claim 9 wherein a package of partially baked bread with a shelf life of at least one month from packed date at room temperature is obtained without needing any additional sterilization step.
